# FASCICULE DE BREVET EUROPEEN

(11) **EP 3 973 554 B1**
(45) Date de publication et mention de la délivrance du brevet: **11.12.2024**
(21) Numéro de dépôt: 20726171.0
(22) Date de dépôt: 22.05.2020
(51) Int. Cl.: H01B 7/42, B60L 53/10, H01B 7/18, H01B 7/02, H01B 9/00

(54) **DISPOSITIF DE CHARGE RAPIDE POUR VÉHICULE ÉLECTRIQUE OU HYBRIDE**
SCHNELLADEVORRICHTUNG FÜR EIN ELEKTRO- ODER HYBRIDFAHRZEUG
FAST CHARGE DEVICE FOR AN ELECTRIC OR HYBRID VEHICLE

(30) Priorité: 22.05.2019 FR 1905372
(43) Date de publication de la demande: 30.03.2022
(73) Titulaire: ACOME, 75014 Paris (FR)
(72) Inventeur: AIT AMEUR, Mehdi, 50140 ROMAGNY (FR); MAGDELAINE, Christian, 35133 PARIGNE (FR)
(74) Mandataire: Regimbeau
(86) Numéro de dépôt international: PCT/EP2020/064326
(87) Numéro de publication internationale: WO 2020/234467

(56) Documents cités:
- EP-A1- 1 033 725
- EP-A1- 2 711 247
- WO-A1-2010/142917
- WO-A1-2018/179866
- WO-A1-2019/062972
- CN-A- 102 637 480
- CN-A- 105 702 357
- CN-A- 106 910 555
- CN-A- 108 944 533
- CN-A- 109 326 375
- CN-U- 202 694 828
- KR-A- 20180 001 733
- KR-A- 20180 001 733
- US-A1- 2016 082 943
- US-A1- 2016 276 064
- US-A1- 2018 174 709

## Description

### DOMAINE TECHNIQUE GENERAL

L'invention concerne le domaine des véhicules électriques ou hybrides. Et elle concerne plus particulièrement la charge rapide de tels véhicules.

### ETAT DE LA TECHNIQUE

L'avènement des véhicules à énergie électrique a nécessité le développement de solutions de recharge des batteries de ces véhicules. Les documents WO 2019/062972 A2, US 2016/082943 A1 décrivent des dispositifs de charge pour véhicule électrique.

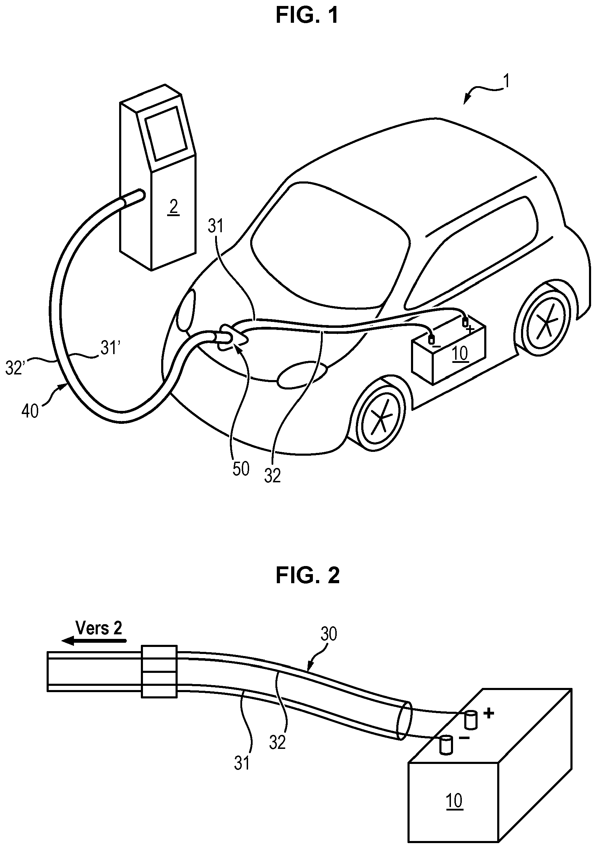

Comme illustré sur la **figure 1****,** pour recharger un véhicule électrique 1, la batterie 10 électrique du véhicule est raccordée au réseau électrique 2 par un ensemble de charge comprenant de part et d'autre d'un connecteur 50 deux câbles 31, 32, 31', 32'. Le connecteur 50 permet de connecter ou déconnecter le dispositif de charge du véhicule. La charge du véhicule s'effectue au moyen soit d'un courant alternatif soit d'un courant continu, les véhicules étant équipés pour être chargés selon l'un ou l'autre des types de courant.

Dans le cadre d'une charge par courant continu, à l'intérieur du véhicule, deux câbles 31, 32 sont raccordés d'une part aux bornes de la batterie 10 du véhicule (un câble 31 pour la borne positive de la batterie et un câble 32 pour la borne négative de la batterie) et d'autre part au connecteur 50. La partie entre le connecteur 50 et la batterie se trouve donc à l'intérieur du véhicule 1.

A l'extérieur du véhicule, deux câbles 31', 32' sont raccordés d'une part au connecteur 50 et d'autre part au réseau électrique 2. La partie entre le connecteur 50 et le réseau électrique 2 se trouve donc à l'extérieur du véhicule 1.

Pour la partie extérieure, les deux câbles 31', 32' sont de préférence agencés au sein d'une même enveloppe pour former un câble d'alimentation 40.

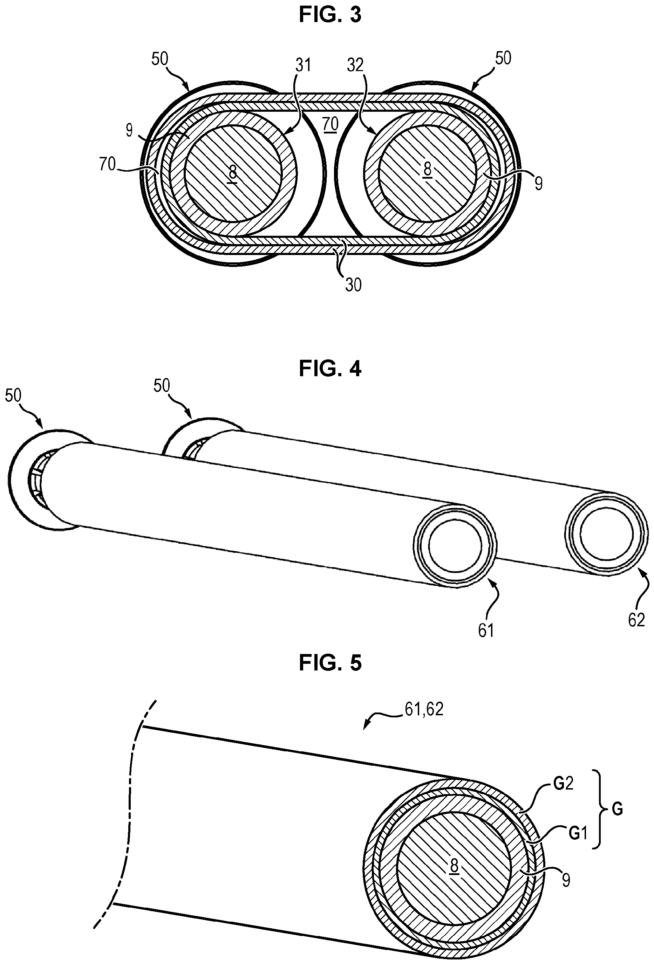

Comme illustré sur les **figures 2** et **3****,** pour la partie intérieure, les câbles 31, 32 sont isolés séparément et protégés ensemble avec une ou plusieurs tresses 30, de nature textile ou métallique. En particulier, chaque câble de charge 31, 32 comprend un conducteur électrique 8 entouré d'une couche isolante 9.

La partie extérieure et la partie intérieure constituent un ensemble de charge, la partie intérieure constitue un dispositif de charge interne.

Jusqu'à présent les ensembles de charge qui ont été développés permettent d'obtenir des temps de rechargement de plusieurs heures (8h par exemple). Ces durées sont jugées trop longues pour un usage facile de ces véhicules.

Aussi, il existe un besoin de réduire ces durées avec pour objectif d'atteindre des durées de 15mn, voire 5mn, pour un rechargement complet de la batterie.

Comme cela est connu, pour diminuer la durée de charge, le courant électrique doit être augmenté.

Or une telle augmentation du courant électrique n'est pas sans problème puisque on observe un échauffement excessif du système par effet joule (W=R.I²).

En particulier, le connecteur est dimensionné pour une charge longue durée, et on souhaite l'utiliser dans une application courte durée. Or avec une section conductrice sous-dimensionnée ceci a pour conséquence une élévation importante de la température sur ce connecteur lors de la charge rapide.

Une solution pour pallier cet échauffement excessif est d'augmenter les sections de conducteurs électriques des câbles est des connecteurs.

Toutefois, pour des raisons de standardisation, il n'est pas envisageable de modifier le connecteur. Et de plus, l'augmentation de ces sections conduit inévitablement à une augmentation du coût et du poids du dispositif de charge ce qui n'est pas souhaitable.

### PRESENTATION DE L'INVENTION

L'invention propose de pallier l'inconvénient précité.

A cet effet, l'invention propose, selon un premier aspect, un dispositif de charge pour véhicule hybride ou électrique destiné à être connecté à un réseau de distribution d'électricité, d'une part et aux bornes d'une batterie d'un véhicule hybride ou électrique d'autre part, ledit dispositif comprenant deux câbles de charge, chacun étant destiné à être connecté à une borne de la batterie, chaque câble de charge comprenant un conducteur électrique et au moins une couche isolante entourant le conducteur électrique, chaque câble de charge comprenant en outre un dispositif de protection constitué d'au moins une gaine disposée autour de la couche isolante en épousant l'ensemble formé par le conducteur électrique et la couche isolante.

L'invention est avantageusement complétée par les caractéristiques suivantes, prises seules ou en une quelconque de leur combinaison techniquement possible :
- ladite au moins une gaine est disposée par un procédé d'extrusion, ou de co-extrusion de manière à être en contact intime non-adhérent avec la couche sur laquelle la gaine est disposée ;
- ladite au moins une gaine est une gaine thermo rétractable de manière à être en contact intime non-adhérent avec la couche sur laquelle la gaine est disposée ;
- le dispositif de protection comprend une première gaine en contact avec la couche isolante ;
- le dispositif de protection comprend en outre une deuxième gaine en contact avec la première gaine ;
- la première gaine et la deuxième gaine présentent des épaisseurs radiales identiques ou différentes ;
- la première gaine et la deuxième gaine sont en matériau identiques ou différents ;
- la première gaine et la deuxième gaine, le cas échéant, est en matériau choisi parmi les : polymères thermoplastiques par exemple le poly vinyle chlorure, le polyéthylène, etc.
- le dispositif de charge comprend un connecteur comprenant une entrée destinée à être connectée à un câble d'alimentation lui-même connecté à un réseau électrique et une sortie depuis laquelle les câbles de charge s'étendent.

L'invention concerne selon un deuxième aspect, un ensemble de charge pour véhicule hybride ou électrique comprenant un dispositif de charge selon le premier aspect de l'invention et un câble d'alimentation destiné à être connecté à un réseau de distribution d'électricité.

Le fait de prévoir une ou plusieurs gaines épousant parfaitement l'ensemble formé par l'élément conducteur et la couche isolante en lieu et place d'une tresse classique utilisée pour entourer les câbles permet de favoriser la dissipation thermique.

En prévoyant des câbles de charge ayant chacun au moins une gaine épousant l'ensemble formé par l'élément conducteur et la couche isolante permet de supprimer les lames d'air et de favoriser la dissipation thermique du dispositif de charge à l'intérieur du véhicule et au niveau du connecteur. La charge rapide est donc désormais possible.

L'utilisation classique d'une ou plusieurs tresses, qui constituent une protection de nature électrique et/ou mécanique pour le câble de charge, créé des lames d'air entre les câbles de charge d'une part mais aussi entre les tresses. Ces lames d'air nuisent à la dissipation thermique.

En effet, le dispositif de charge, notamment, lorsqu'il est raccordé au connecteur permet d'évacuer les calories : par conduction thermique du connecteur vers le conducteur électrique du câble de charge ; par conduction thermique à travers l'isolant du câble de charge ; par conduction thermique à travers la tresse du câble de charge (protection mécanique et électrique) et de la lame d'air générée par cette tresse ; par convection naturelle et rayonnement vers l'environnement du câble de charge. En outre, la dissipation thermique de la puissance générée par effet joule dans les éléments conducteurs électriques dépend de la conductivité de l'élément conducteur, de la nature de la couche isolante et de la nature de la tresse et bien entendu de la présence d'une lame d'air.

En conséquence, les avantages de l'invention sont les suivants :
- favorise l'échange thermique câble-ambiance ;
- permet d'évacuer plus rapidement les calories apportées sur le connecteur ;
- permet un gain sur le temps de mise en oeuvre du dispositif des câbles de charge ;
- permet un gain de temps au niveau fabrication du faisceau électrique entrant dans le dispositif de charge ;
- permet de réduire le temps de charge (augmenter le courant de charge).

### PRESENTATION DES FIGURES

[Fig. 1]
[Fig. 2]
[Fig. 3]
[Fig. 4]
[Fig. 5]

D'autres caractéristiques, buts et avantages de l'invention ressortiront de la description qui suit, qui est purement illustrative et non limitative, et qui doit être lue en regard des dessins annexés sur lesquels, outre les figures 1 à 3 déjà discutées :
- la figure 4 illustre une vue d'ensemble d'un dispositif de charge pour véhicule électrique conforme à l'invention ;
- la figure 5 illustre une vue détaillée d'un câble de charge d'un dispositif de charge conforme à l'invention.

Sur l'ensemble des figures, les éléments similaires portent des références identiques.

### DESCRIPTION DETAILLEE

On a illustré sur les **figures 4** et **5** un dispositif de charge pour véhicule électrique ou hybride destiné à être disposé dans la partie intérieure du véhicule électrique ou hybride. Un tel dispositif comprend un connecteur 50 depuis lequel deux câbles de charge 61, 62 s'étendent vers la batterie (non représentée). En particulier, les câbles de charge 61, 62 sortent des terminaux du connecteur 50 indépendamment l'un de l'autre. Ils ne sont pas entourés d'une quelconque gaine ou tube comme c'est le cas dans l'art antérieur (voir figure 2). De cette manière, les câbles de charge 61, 62 peuvent cheminer indépendamment l'un de l'autre à l'intérieur du véhicule pour aller jusqu'à la batterie et ainsi passer dans des espaces indépendants. Ceci permet de faciliter l'installation du dispositif de charge.

Chaque câble de charge 61, 62 doit supporter une intensité de référence qui dépend du temps de charge requis pour la batterie. Par exemple, pour la recharge en courant alternatif d'une batterie de 36kw il faut 10h pour la recharger complètement (230Vac x 16Ah = 3,6kWh).

Chaque câble de charge comprend, comme discuté ci-avant, un conducteur électrique 8 entouré d'une couche isolante 9.

Le conducteur électrique 8 est, par exemple, constitué de cuivre, d'un alliage de cuivre, d'aluminium ou d'un alliage d'aluminium, etc.

La couche isolante 9 est par exemple en matériau thermoplastique, PVC (poly vinyle chlorure sans plomb), XLPE (polyéthylène réticulé), etc.

De manière avantageuse, chaque câble de charge est identique afin d'avoir une répartition homogène de l'intensité.

A la différence de la configuration présentée en introduction, les câbles de charge ne sont pas entourés ensemble d'une ou plusieurs tresses mais sont entourés individuellement par un dispositif G de protection comprenant une ou deux gaines G1, G2. Ainsi, pour chaque câble de charge, l'ensemble formé par le conducteur électrique et la couche isolante est entouré du dispositif de protection G.

On peut prévoir que le dispositif de protection G comprenne une première gaine G1 et éventuellement une deuxième gaine G2. On comprendra que la notion de gaine utilisée ici n'est en aucun cas assimilable à une quelconque tresse.

En outre, un câble de charge peut être entouré de deux gaines tandis que l'autre est entouré d'une seule gaine.

Chaque gaine est avantageusement disposée selon un procédé d'extrusion ou de co-extrusion afin d'être en contact non adhérent avec la couche sur laquelle elle est disposée. Le contact non-adhérent contribue à faciliter l'installation du dispositif de charge notamment pour dénuder le câble de charge pour son raccord à la batterie.

La gaine peut être de nature thermo rétractable.

De manière plus précise, dans le cas d'un dispositif de protection avec une seule gaine, cette dernière est en contact non adhérent avec la couche isolante 9 du câble de charge tandis que dans le cas d'un dispositif de protection avec deux gaines G1, G2 la deuxième gaine est en contact non adhérent avec la première gaine G1. Comme on l'aura compris la gaine est en contact intime avec la couche sur laquelle elle est déposée et permet d'éviter d'avoir des lames d'air. En effet, en revenant à la figure 3 qui montre deux câbles regroupés dans deux tresses 30, des lames d'air 70 sont présentes entre les câbles mais aussi entre les tresses.

Chaque gaine G1, G2 est en matière de nature polymérique homogène et est par exemple en matériau : PVC (poly vinyle chlorure sans plomb), XLPE (polyéthylène réticulé), etc.

On peut prévoir dans le cas de deux gaines que chaque gaine est en matériau différent. Chaque type de gaine répond indépendamment aux contraintes (électrique, mécanique, thermique) difficilement vérifiées par un seul type de matériau.

Chaque gaine peut avoir une épaisseur radiale comprise entre 0,5 mm et 1,5 mm, de préférence 0,7 mm ou encore 1 mm. En outre, on peut prévoir que dans le cas d'un dispositif de protection comprenant deux gaines G1, G2 ne présentent pas la même épaisseur radiale. Bien entendu, l'épaisseur des deux gaines peut être identique. Plus l'épaisseur d'au moins une gaine est grande, plus la section du câble augmente et favorise la dissipation thermique.

La première gaine G1 peut présenter une épaisseur radiale supérieure ou inférieure à l'épaisseur de la deuxième gaine G2.

Selon une réalisation préférée, chaque câble de charge est entouré de deux gaines et présente les caractéristiques suivantes :
- Epaisseur radiale de la gaine G1 : 1 mm
- Epaisseur radiale de la gaine G2 : 0,70 mm
- Epaisseur radiale de la couche isolante : 2 mm
- Diamètre de l'élément conducteur : 12,6mm.

Une configuration avec deux câbles de charge avec les caractéristiques ci-dessus a été testée en faisant circuler une intensité de 350 A dans chaque câble de charge et comparée à une configuration telle que présentée en introduction avec deux tresses (voir la figure 3).
- Epaisseur de la tresse 1 : 1 mm
- Epaisseur de la tresse 2 : 0,70 mm
- Epaisseur équivalente moyenne lame d'air : 5 mm
- Epaisseur radiale de la couche isolante : 2 mm
- Diamètre de l'élément conducteur : 12,6mm.

**[Table 1]**

| | Configuration figure 3 avec deux tresses | Configuration avec deux gaines |
|---|---|---|
| Elévation de Température conducteur interne | 57,2°C | 33,2°C |
| Elévation de Température couche isolante | 54,5 °C | 28,3°C |
| Elévation de Température au niveau du connecteur | 60,4°C | 46,2°C |

On constate bien une diminution sensible de l'élévation de la température à plusieurs endroits du dispositif de charge.

## Revendications

1. Dispositif de charge rapide pour véhicule hybride ou électrique destiné à être connecté à un réseau de distribution d'électricité (2), d'une part et aux bornes d'une batterie (10) d'un véhicule hybride ou électrique d'autre part, ledit dispositif comprenant
- deux câbles (61, 62) de charge adaptés pour cheminer indépendamment l'un de l'autre à l'intérieur d'un véhicule, les deux câbles n'étant pas entourés d'une quelconque gaine ou tube commun aux deux câbles ;
- un connecteur (50) comprenant une entrée destinée à être connectée à un câble d'alimentation lui-même destiné à être connecté à un réseau de distribution d'électricité et une sortie depuis laquelle les câbles de charge s'étendent ;
chacun des deux câbles étant destiné à être connecté à une borne de la batterie à une extrémité du câble, et à l'autre extrémité à un terminal respectif de la sortie du connecteur (50),
chaque câble de charge (61, 62) comprenant un conducteur électrique (8) et au moins une couche isolante (9) entourant le conducteur électrique (8), la couche isolante (9) étant en contact direct avec le conducteur électrique (8) ; chaque câble de charge comprenant en outre un dispositif (G) de protection constitué d'au moins une gaine (G1, G2) disposée autour de la couche isolante en épousant l'ensemble formé par le conducteur électrique (8) et la couche isolante (9), une gaine de l'au moins une gaine du dispositif (G) de protection étant en contact direct avec la couche isolante de manière à favoriser la dissipation thermique du dispositif de charge à l'intérieur du véhicule et au niveau du connecteur.

2. Dispositif de charge selon la revendication 1, dans lequel ladite au moins une gaine est disposée par un procédé d'extrusion, ou de co-extrusion de manière à être en contact intime non-adhérent avec la couche sur laquelle la gaine est disposée.

3. Dispositif de charge selon la revendication 1, dans lequel ladite au moins une gaine est une gaine thermo rétractable de manière à être en contact intime non-adhérent avec la couche sur laquelle la gaine est disposée.

4. Dispositif de charge selon l'une des revendications 1 à 3, dans lequel le dispositif (G) de protection comprend en outre une deuxième gaine (G2) en contact avec la première gaine (G1).

5. Dispositif de charge selon la revendication 4, dans lequel la première gaine (G1) et la deuxième gaine (G2) présentent des épaisseurs radiales identiques ou différentes.

6. Dispositif de charge selon l'une des revendications 4 à 5, dans lequel la première gaine (G1) et la deuxième gaine (G2) sont en matériau identiques ou différents.

7. Dispositif de charge selon l'une des revendications 4 à 5, dans lequel la première gaine (G1) et la deuxième gaine (G2), le cas échéant, est en matériau choisi parmi les : polymères thermoplastiques par exemple le poly vinyle chlorure, le polyéthylène.

8. Ensemble de charge pour véhicule hybride ou électrique comprenant un dispositif de charge selon l'une des revendications précédentes et un câble d'alimentation destiné à être connecté à un réseau de distribution d'électricité.

## Patentansprüche

1. Schnellladevorrichtung für ein Hybrid- oder Elektrofahrzeug, die dazu bestimmt ist, einerseits an ein Stromverteilungsnetz (2) und andererseits an die Klemmen einer Batterie (10) eines Hybrid- oder Elektrofahrzeugs angeschlossen zu werden, wobei die Vorrichtung umfasst
- zwei Ladekabel (61, 62), die geeignet sind, unabhängig voneinander im Inneren eines Fahrzeugs zu verlaufen, wobei die zwei Kabel nicht von einer wie auch immer gearteten Hülle oder Schlauch umgeben sind, die/der beiden Kabeln gemeinsam ist;
- einen Verbinder (50), der einen Eingang umfasst, der dazu bestimmt ist, an ein Versorgungskabel angeschlossen zu sein, das selbst dazu bestimmt ist, an ein Stromverteilungsnetz angeschlossen zu sein, und einen Ausgang, von dem aus sich die Ladekabel erstrecken;
wobei jedes der beiden Kabel dazu bestimmt ist, an eine Klemme der Batterie an einem Ende des Kabels und am anderen Ende an ein jeweiliges Endstück des Ausgangs des Verbinders (50) angeschlossen zu werden,
wobei jedes Ladekabel (61, 62) einen elektrischen Leiter (8) und mindestens eine den elektrischen Leiter (8) umgebende Isolierschicht (9) umfasst, wobei die Isolierschicht (9) in direktem Kontakt mit dem elektrischen Leiter (8) ist; wobei jedes Ladekabel ferner eine Schutzvorrichtung (G) umfasst, die aus mindestens einer Hülle (G1, G2) besteht, die um die Isolierschicht herum angeordnet ist und sich an die von dem elektrischen Leiter (8) und der Isolierschicht (9) gebildete Anordnung anpasst, wobei eine Hülle der mindestens einen Hülle der Schutzvorrichtung (G) in direktem Kontakt mit der Isolierschicht derart ist, dass die Ableitung von Wärme von der Ladevorrichtung in das Innere des Fahrzeugs und im Bereich des Verbinders gefördert wird.

2. Ladevorrichtung nach Anspruch 1, wobei die mindestens eine Hülle durch ein Extrusions- oder Koextrusionsverfahren so angeordnet ist, dass sie in engem, nicht haftendem Kontakt mit der Schicht steht, auf der die Hülle angeordnet ist.

3. Ladevorrichtung nach Anspruch 1, wobei die mindestens eine Hülle eine Hülle ist, die derart wärmeschrumpfbar ist, dass sie in engem, nicht haftendem Kontakt mit der Schicht steht, auf der die Hülle angeordnet ist.

4. Ladevorrichtung nach einem der Ansprüche 1 bis 3, wobei die Schutzvorrichtung (G) ferner eine zweite Hülle (G2) umfasst, die mit der ersten Hülle (G1) in Kontakt steht.

5. Ladevorrichtung nach Anspruch 4, wobei die erste Hülle (G1) und die zweite Hülle (G2) gleiche oder unterschiedliche radiale Dicken aufweisen.

6. Ladevorrichtung nach einem der Ansprüche 4 bis 5, wobei die erste Hülle (G1) und die zweite Hülle (G2) aus gleichem oder unterschiedlichem Material sind.

7. Ladevorrichtung nach einem der Ansprüche 4 bis 5, wobei die erste Hülle (G1) und gegebenenfalls die zweite Hülle (G2) aus einem Material ist, das aus thermoplastischen Polymeren, beispielsweise Polyvinylchlorid, Polyethylen ausgewählt ist.

8. Ladeanordnung für ein Hybrid- oder Elektrofahrzeug, umfassend eine Ladevorrichtung nach einem der vorhergehenden Ansprüche und ein Versorgungskabel, das bestimmt ist, an ein Stromversorgungsnetz angeschlossen zu werden.

## Claims

1. A fast charging device for a hybrid or electric vehicle intended to be connected to an electricity distribution network (2), on the one hand, and to the terminals of a battery (10) of a hybrid or electric vehicle, on the other hand, said device comprising:
- two charging cables (61, 62) adapted to run independently of each other inside a vehicle, the two cables not being surrounded by any sheath or tube common to the two cables;
- a connector (50) comprising an input for connection to a power cable to be connected to an electricity distribution network, and an outlet from which the load cables extend;
each of the two cables being intended to be connected to a battery terminal at one end of the cable, and at the other end to a respective terminal of the connector output (50), each charging cable (61, 62) comprising an electrical conductor (8) and at least one insulating layer (9) surrounding the electrical conductor (8), the insulating layer (9) being in direct contact with the electrical conductor (8); each charging cable further comprising a protective device (G) consisting of at least one sheath (G1, G2) arranged around the insulating layer and conforming to the assembly formed by the electrical conductor (8) and the insulating layer (9), a sheath of the at least one sheath of the protective device (G) being in direct contact with the insulating layer so as to promote heat dissipation from the charging device inside the vehicle and at the connector.

2. The charging device according to claim 1, wherein said at least one sheath is arranged by an extrusion, or co-extrusion process so as to be in intimate non-adherent contact with the layer on which the sheath is arranged.

3. The charging device according to claim 1, wherein said at least one sheath is a heat-shrinkable sheath so as to be in intimate non-adherent contact with the layer on which the sheath is arranged.

4. The charging device according to any one of claims 1 to 3, wherein the protective device (G) further comprises a second sheath (G2) in contact with the first sheath (G1).

5. The charging device according to claim 4, wherein the first sheath (G1) and the second sheath (G2) have identical or different radial thicknesses.

6. The charging device according to any of claims 4 to 5, wherein the first sheath (G1) and the second sheath (G2) are made of the same or different materials.

7. The charging device according to one of claims 4 to 5, wherein the first sheath (G1) and the second sheath (G2), if any, is made of a material selected from: thermoplastic polymers e.g. polyvinyl chloride, polyethylene.

8. Charging assembly for a hybrid or electric vehicle comprising a charging device according to one of the preceding claims and a supply cable intended to be connected to an electricity distribution network.
